# EUROPEAN PATENT APPLICATION

(11) **EP 2 930 020 A1**
(43) Date of publication of application: **14.10.2015**
(21) Application number: 13859966.7
(22) Date of filing: 08.11.2013
(51) Int. Cl.: B32B 27/10, B27N 3/12, B32B 27/00, B32B 27/40

(54) **READILY FORMABLE DECORATIVE PAPER AND PROCESS FOR PRODUCING MOLDED FIBROUS ARTICLE THROUGH SIMULTANEOUS MOLDING/DECORATION**

(30) Priority: 05.12.2012 JP 2012266013
(71) Applicant: Nissha Printing Co., Ltd., Kyoto-shi, Kyoto 604-8551 (JP)
(72) Inventor: OHNISHI, Tomoyuki, Kyoto-shi Kyoto 604-8551 (JP); TAKENAKA, Hiroshi, Kyoto-shi Kyoto 604-8551 (JP)
(74) Representative: Pontet Allano & Associes
(86) International application number: PCT/JP2013/080217
(87) International publication number: WO 2014/087795

(57) **Abstract**

The present invention relates to a decorated readily formable paper suitable for an in-mold decorated fibrous molded article and the invention relates also to a method of manufacturing an in-mold decorated fibrous molded article. Provided are a decorated readily formable paper which suffers no ink running during molding and which also has superior friction resistance and a method of manufacturing an in-mold decorated fibrous molded article using such paper. A decorated readily formable paper 11 includes a readily formable paper 1, a pattern layer 8 formed on one face of the readily formable paper 1, a varnish layer 9 formed on the readily formable paper 1 and the pattern layer 8, and a protection layer 10 formed on the varnish layer 9. The pattern layer 8, the varnish layer 9 and the protection layer 10 are printed layers 2.

## Description

### Technical Field

The present invention relates to a decorated readily formable paper suitable for an in-mold decorated fibrous molded article and relates also to a method of manufacturing an in-mold decorated fibrous molded article.

### Background Art

According to a known method of manufacturing a fibrous molded article, as a molding material, there is employed a mixture obtained by adding polymer binder and water to a fibrous main raw material and kneading and mixing these together. The resultant molding material is charged into a cavity of a heated mold. Then, a gap ranging from 0.02 to 0.50 mm is formed between parting faces of the mold, from which gap vapor generated within the cavity is discharged and removed to allow the molding material to be dried and solidified, thus obtaining a fibrous molded article (see e.g. Patent Document 1 and Patent Document 2).

Pulp is often used as the fibrous main raw material in the above-described manufacturing method. Thus, the above-described method of manufacturing a fibrous molded article is referred to also as "Pulp Injection Molding (PIM)" (a registered trademark).

Further, as a method of providing beautiful decoration to the above-described fibrous molded article, there is known a method of manufacturing an in-mold decorated (i.e. simultaneously molded and decorated) fibrous molded article.

In this method of manufacturing an in-mold decorated fibrous molded article, decoration is made in advance by forming a decorative pattern on a decorated readily formable paper whose apparent size is reduced by formation of fine creases on one face thereof. This decorated readily formable paper is fitted or sandwiched in a mold and then clamped. Subsequently, a mixture prepared by adding polymer binder and water to a fibrous main raw material and mixed/kneaded together, as a molding material, is charged into a cavity of a heated mold. Then, a gap ranging from 0.02 to 0.50 mm is formed between parting faces of the mold, from which gap vapor generated within the cavity is discharged and removed to allow the molding material to be dried and solidified. Next, the mold is opened, from which a fibrous molded article having the decorated readily formable paper integrally formed on its surface is obtained (Patent Document 3).

### Background Art Documents

### Patent Documents

Patent Document 1: Japanese Registered Patent No. 2916136
Patent Document 2: Japanese Registered Patent No. 3084216
Patent Document 3: Japanese Unexamined Patent Application Publication No. 2011-136498

### Summary

### Problem to be Solved by Invention

However, the above-described conventional method of manufacturing an in-mold decorated fibrous molded article suffers the following problems. Namely, due to the heat of the heated mold and the pressing force applied to the decorated readily formable paper at the time of charging of the molding material within the cavity, fluidization of pattern-forming ink occurs, which leads to non-uniformity in the film thickness of the pattern-forming ink. This non-uniformity of film thickness can result in color irregularity (this phenomenon is referred to as "ink running"). Further, in the surface pattern formed on the readily formable paper, failure of ink adhesion can occur due to presence of vapor generated at the time of molding, which renders friction resistance of the in-mold decorated fibrous molded article insufficient.

The present invention has been made to solve the problems above. The object of the invention is to provide a decorated readily formable paper which is free from ink running at the time of molding and which achieves good friction resistance in the in-mold decorated fibrous molded article and to provide a method of manufacturing such in-mold decorated fibrous molded article.

### Solution

Then, in order to achieve the above-noted object, according to a first invention, a decorated readily formable paper comprises:
a readily formable paper whose apparent size is reduced by formation of fine creases on one face thereof;
a pattern layer formed on one face of the readily formable paper;
a varnish layer formed on the readily formable paper and the pattern layer; and
a protection layer formed on the varnish layer, the protection layer being comprised of an ink composition containing a polyol-based compound and a multifunctional isocyanate.

According to a second invention, in the decorated readily formable paper having the above configuration of the first invention, a weight ratio between the polyol-based compound and the multifunctional isocyanate ranges from 100/3 to 100/20 parts.

According to a third invention, in the decorated readily formable paper having the above configuration of the first or second invention, the ink composition of the protection layer further contains silica solid particles by 5 to 25 wt.%.

According to a fourth invention, in the decorated readily formable paper having the above configuration of any one of the first through third inventions, the polyol-based compound comprises acryl polyol having an OH value ranging from 20 to 90.

According to a fifth invention, in the decorated readily formable paper having the above configuration of any one of the first through fourth inventions, the polyol-based compound comprises acryl polyol having an OH value ranging from 80 to 90.

According to a sixth invention, in the decorated readily formable paper having the above configuration of any one of the first through fourth inventions, the polyol-based compound comprises acryl polyol having an OH value ranging from 20 to 30.

According to a seventh invention, in the decorated readily formable paper having the above configuration of any one of the first through sixth inventions, the isocyanate comprises hexamethylene diisocyanate type.

According to an eighth invention, a method of manufacturing an in-mold decorated fibrous molded article, comprises the steps of:
fitting the decorated readily formable paper according to any one of the first through seventh inventions in a mold;
clamping the mold;
preparing a mixture by adding polymer binder and water to a fibrous main raw material and mixed/kneaded together as a molding material and charging the molding material within a cavity of the mold which is heated;
forming a gap ranging from 0.02 to 0.50 mm between parting faces of the mold and discharging and removing vapor generated within the cavity from the gap, and allowing the molding material to be dried and solidified; and
opening the mold and obtaining therefrom a fibrous molded article having the decorated readily formable paper integrally formed on its surface.

According to a ninth invention, in the method of manufacturing in-mold decorated fibrous molded article according to the eighth invention, the readily formable paper before being fitted in the mold has a water content ranging from 5 to 10%.

According to a tenth invention, a decorated readily formable paper comprises:
a readily formable paper whose apparent size is reduced by formation of fine creases on one face thereof;
a varnish layer formed on one face of the readily formable paper;
a pattern layer formed on the varnish layer; and
a protection layer formed on the pattern layer, the protection layer being comprised of an ink composition containing a polyol-based compound and a multifunctional isocyanate.

The tenth invention can be combined with any one of the second through ninth inventions as desired.

### Effects of the Invention

As described above, in the decorated readily formable paper according to the present invention, the protection layer is configured such that the hydroxyl group of the polyol-based compound and the isocyanate groups of the isocyanate are crosslinked, i.e. thermoset, with each other by the heat used when the ink applied film is dried. Therefore, even when exposed to the heat of the heated mold and the pressing pressure applied to the decorated readily formable paper at the time of charging of the molding material within the cavity, the fluidization of pattern-forming ink leading to non-uniformity in the film thickness of the pattern-forming ink is effectively restricted by the protection layer which is thermoset. That is, the ink running phenomenon can be prevented.

Moreover, since the protection layer is thermoset to be firmly bonded to the readily formable paper, close-contact state relative to the pattern layer interposed therebetween is improved, so that there is achieved superior friction resistance.

Further, the method of manufacturing an in-mold decorated fibrous molded article according to the present invention can provide an in-mold decorated molded fibrous article achieving the above-described effects.

### Brief Description of the Drawings

[Fig. 1] is a section view showing one example of a decorated readily formable paper for use in the present invention,
[Fig. 2] is a photo showing one example of fine creases formed in one face of the decorated readily formable paper for use in the present invention,
[Fig. 3] is a section view showing one embodiment of the present invention,
[Fig. 4] is a section view showing one embodiment of the present invention,
[Fig. 5] is a section view showing one embodiment of the present invention,
[Fig. 6] is a perspective view showing one embodiment of the present invention, and
[Fig. 7] is a section view showing another example of a decorated readily formable paper for use in the present invention.

### Embodiments

### [Decorated readily formable paper]

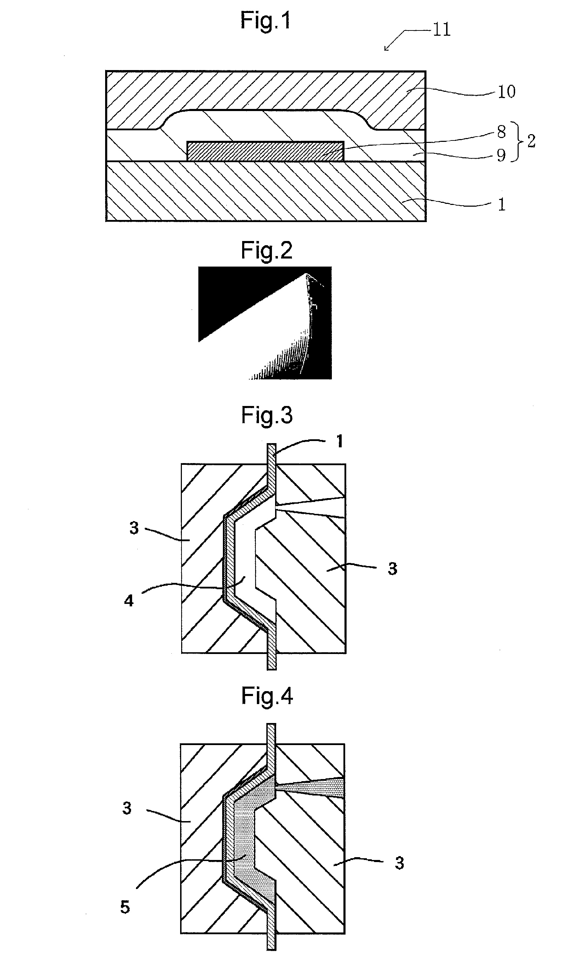

Fig. 1 shows a first embodiment of the present invention.

A decorated readily formable paper 11 shown in Fig. 1 includes a readily formable paper 1, a pattern layer 8 formed on one face of the readily formable paper 1, a varnish layer 9 formed on the readily formable paper 1 and the pattern layer 8, and a protection layer 10 formed on the varnish layer 8. The pattern layer 8, the varnish layer 9 and the protection layer 10 are printed layers 2.

The readily formable paper 1 used herein has its apparent size reduced by formation of fine creases on one face thereof (see Fig. 2). The readily formable paper 1 having the above configuration has good three-dimensional formability/shapability, so that when this paper is integrally laminated on a surface of a fibrous molded article 6 having a three-dimensional shape, lamination can be implemented beautifully without formation of wrinkles or discontinuities. Further, in a drying process to be carried out subsequently, the above paper provides superior vapor permeability. And, no quality change or deterioration occurs in the paper per se due to heat applied during the drying process.

More particularly, the readily formable paper 1 to be used can be obtained by a manufacturing method described next. Namely, a wetted paper whose water content in the paper is adjusted to from 20 to 50% is prepared. The method employs a shrinkage applying device including a metal roll having grooves along a circumferential direction spaced apart by a fixed distance from each other in a width direction of the roll and a flat and smooth rubber roll. Then, the wetted paper is fed to the shrinkage applying device as a press roll operated such that the rubber roll is being rotated at a lower circumferential speed than a circumferential speed of the metal roll, whereby the paper is shrunk and then dried. With this, there can be obtained a readily formable paper 1 having from 15 to 50% break elongation in the vertical and lateral directions (see Japanese Registered Patent No. 3407114, etc.).

Natural pulp as raw material of the readily formable paper 1 is not particularly limited, but can be any conventional paper making material such as wood pulp using conifer tree wood or broad-leaved tree wood, non-wood pulp such as kenaf or bagasse, or waste paper pulp, etc. From the viewpoint of versatility, however, use of wood pulp is preferred. Respecting the freeness of such wood pulp, CSF 200 to 450 ml is preferred in terms of stretching performance, strength, paper making readiness, etc., CSF 250 to 400 ml is more preferred. The mixing ratio of natural pulp is preferably 50% or more.

The pattern layer 8 is a layer for providing desired esthetic feature, which layer is provided on an entire surface or a part of the surface. A graphic or decorative pattern included in the pattern layer 8 can be obtained by using an ornamental pattern layer or whole-face daubed layer singly or in desired combination. Decoration is made with formation of a graphic design 2 by such method as various printing techniques. As such printing technique, relief printing, intaglio printing, lithography, stencil printing, etc. can be used. Further alternatively, the pattern layer 8 can be formed by a means not using any plate, such as inkjet printing technique. Ink for forming the pattern layer 8 can be any oil-based offset ink in general use. For instance, in the respect of closer (gapless) contact with the readily formable paper, one containing rosin-modified phenol or rosin-modified alkyd resin and not containing any petroleum-based solvent is preferred, e.g. "BEST ONE BEST SP (commercial name)" (manufactured by T&K, TOKA, Co. Ltd.). Further, the pattern layer 8 can be formed such that ink is impregnated into fibers constituting the readily formable paper 1.

Incidentally, as a coloring agent or binder for the ink, one derived from natural source or having biodegradability can be used. With this, when the in-mold decorated fibrous molded article 7 is to be reused or disposed of, environmental issue can be dealt with more easily.

The varnish layer 9 is a layer for preventing elution of the pattern layer 8 due to molding heat, which layer is to be laminated on the pattern layer 8. The varnish layer 9 comprises a layer of oxidative polymerization type. For instance, "Super-Anti-Blocking OP Varnish (commercial name)" (manufactured by Mitsuboshi Printing Ink Co., Ltd.) can be used. As its printing method, relief printing, intaglio printing, lithography, stencil printing, etc. can be used.

The protection layer 10 is a layer for protecting the varnish layer 9 and the pattern layer 8. The protection layer 10 comprises a layer formed of an ink composition containing a polyol-based compound and a multifunctional isocyanate. As its printing method, relief printing, intaglio printing, lithography, stencil printing, etc. can be used.

### [Polyol-Based Compound]

The polyol-based compound can be polyester polyol, polyether polyol, or acryl polyol. Among these, acryl polyol is particularly preferred; for instance, the compound preferably contains, as essential constituents thereof, two groups of acyl monomers, i.e. an acryl monomer selected from 2-hydroxyethyl acrylate and 2-hydroxyethyl methacrylate and an acryl monomer selected from methyl acrylate and methyl methacrylate. Further, as polyester polyol, there will be employed one formed by a reaction between a saturated or unsaturated divalent alcohol such as ethylene glycol, propylene glycol, neopentyl glycol, 1,4-butanediol, 1,4-butenediol, 1,6-hexandiol, furandimethanol and cyclohexane dimethanol and a saturated or unsaturated polycarboxylic acid such as maleic acid, fumaric acid, itaconic acid, succinic acid, glutaric acid, adipic acid, isophthalic acid, terephthalic acid, phthalic anhydride, dimethyl terephthalate, dimer acid, etc. Further, the polyether polyol can be prepared by addition polymerization of ethylene oxide, propylene oxide, tetrahydrofuran, etc. to a low molecular polyol such as a divalent alcohol such as ethylene glycol, diethylene glycol, propylene glycol, butylene glycol, hexamethylene glycol or a trivalent alcohol such as trimethylolpropane, glycerin, pentaerythritol, etc. Incidentally, as the polyol-based compound, one diluted with a solvent is readily used in terms of handling ease.

Further, the polyol-based compound preferably comprises acryl polyol having an OH (hydroxyl) value ranging from 20 to 90. This is because of superior thermosetting performance and stretching ability, thanks to the crosslinking density between the hydroxyl group of acryl polyol and the isocyanate group of isocyanate. With acryl polyol having an OH value of 20 or more, the crosslinking density between the hydroxyl group of acryl polyol and the isocyanate group of isocyanate is high, so that thermosetting performance is enhanced, which allows increase in the effects of ink running prevention and friction resistance. Especially, acryl polyol having an OH value of from 80 to 90 provided particularly distinguished thermosetting performance. Further, with acryl polyol having an OH value of 90 or lower, the crosslinking density between the hydroxyl group of acryl polyol and the isocyanate group of isocyanate is low, so that the stretching ability can be enhanced. Especially, acryl polyol having an OH value ranging from 20 to 30 provided particularly distinguished stretching ability.

### [Multifunctional Isocyanate]

The multifunctional isocyanate is not particularly limited, but can be any conventional one which has at least two isocyanate groups in one molecule. For instance, as examples thereof, there can be cited: chain aliphatic diisocyanates such as methylene diisocyanate, isopropylene diisocyanate, butane-1, 4-diisocyanate, hexamethylene diisocyanate, 2, 2, 4-trimethyl hexamethylene diisocyanate, 2, 4, 4-trimethyl hexamethylene diisocyanate, dimer isocyanate having a carboxyl group included in a dimer acid substituted for by an isocyanate group; cyclic aliphatic diisocyanates such as cyclohexane-1, 4-diisocyante, isophorone diisocyanate, dicyclohexylmethane-4,4'-diisocyanate, 1, 3-di (isocyanate methyl) cyclohexane, methyl cyclohexane diisocyanate; aromatic diisocyanates such as dialkyl diphenyl methane diisocyanate such as 4, 4'-diphenyl dimethylmethane diisocyante, tetraalkyl diphenyl methane diisocyanate such as 4, 4'-diphenyl tetramethyl methane diisocyanate, 1,-5-naphthylene diisocyanate, 4, 4'-diphyenyl methane diisocyanate, 4, 4'-diphenyl dimethyl methane diisocyanate, 4, 4'-dibenzyl isocyanate, 1, 3-phenylene diisocyanate, 1, 4-phenylene diisocyanate, tolylene diisocyanate, xylene diisocyanate, m-tetramethyl xylene diisocyanate; amino acid diisocyanate such as lysine diisocyanate. These can be used singly or in combination. Further, in the present invention, in addition to the diisocyanates cited above, other isocyanates (mono isocyanate, trivalent isocyanates, etc.) can also be used as long as they do not impair the advantageous effects of the present invention.

If the multifunctional isocyanate is hexamethylene diisocyanate type (HDI type), superior flexibility of coated film can be provided.

As some non-limited examples of such HDI isocyanates, 1, 6-hexamethylene diisocyanate, 2, 2, 4-trimethyl hexamethylene diisocyanate, 2, 4, 4-trimethyl hexamethylene diisocyanate, etc. can be cited.

Incidentally, preferably, the weight ratio between the polyol-based compound and the multifunctional isocyanate ranges from 100/3 to 100/20 parts. If the value is blow the lower limit, insufficiency of crosslinking will occur, which leads to insufficiency of heat resistance, disadvantageously. On the other hand, if the value exceeds the upper limit, excessive crosslinking will cause insufficiency of flexibility and side reaction due to the excessive isocyanate, disadvantageously. More preferably, the ratio should range from 100/6 to 100/7 parts.

### [Method of Manufacturing In-Mold Decorated Fibrous Molded Article]

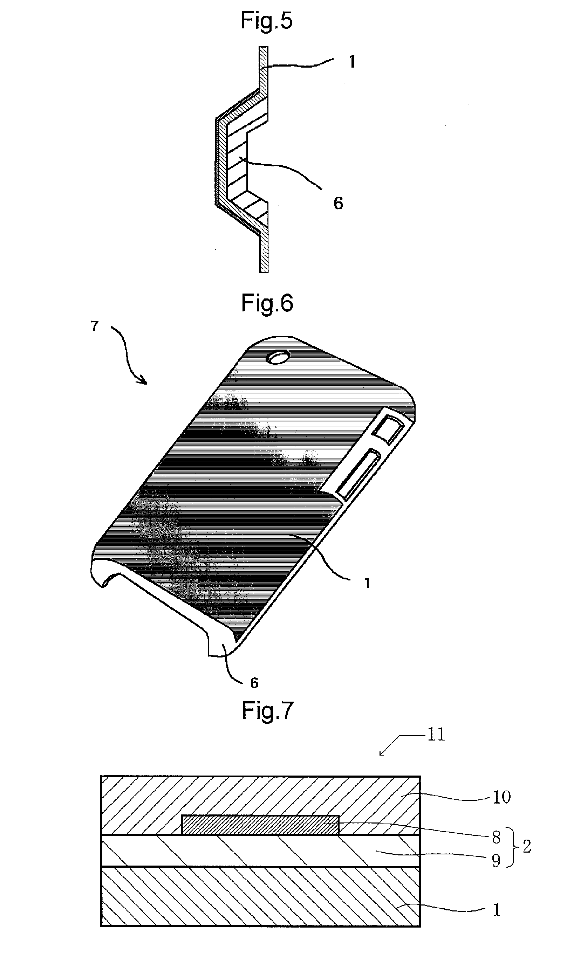

Next, with reference to Figs. 3 through 6, there will be explained a method of manufacturing an in-mold decorated fibrous molded article 7. Firstly, the readily formable paper 11 described above is fitted in a mold 3 and then clamped (see Fig. 3). Next, as a molding material 5, there is employed a mixture obtained by adding polymer binder and water to a fibrous main raw material and kneading and mixing them together. The resultant molding material 5 is charged into a cavity 4 of the mold 3 which is being heated (see Fig. 4). Then, a gap ranging from 0.02 to 0.50 mm is formed between parting faces of the mold 3, from which gap vapor generated within the cavity 4 is discharged and removed to allow the molding material 5 to be dried and solidified. Then, the mold is opened, from which a fibrous molded article 6 having the decorated readily formable paper 11 formed integrally on its surface is obtained (see Fig. 5).

The above-described decorated readily formable paper 11 is stored for a predetermined period in a room which allows humidity adjustment, so as to adjust the amount of water in the decorated readily formable paper 11 in advance of fitting in a mold 3. In this, preferably, the water content should be adjusted to a water content that restrains temperature rise of the decorated readily formable paper 11, e.g. from 5 to 10%. If the value exceeds the upper limit, the decorated readily formable paper 11 will be stretched due to the water, which makes positioning precision of the decorated readily formable paper 11 difficult. On the other hand, if the content is below the lower limit, the decorated readily formable paper 11 will be shrunk, which again makes positioning precision of the decorated readily formable paper 11 difficult. Moreover, color staining and color fainting will tend to occur at the time of molding.

With use of the decorated readily formable paper 11 whose water content has been adjusted in the manner described above, it becomes possible to obtain a beautiful in-mold decorated fibrous molded article 7 without color staining or color fainting. This is because such color staining and color fainting occur when the temperature of the decorated readily formable paper 11 rises in the case of its water content being low, which leads to rise in temperature of the ink of the pattern layer 8 formed on the decorated readily formable paper 11. Namely, if the water content is kept higher than a predetermined value, temperature rise of the decorated readily formable paper 11 will be effectively restricted within the mold, so that color staining to the interior of the mold 3 can be avoided. Further, the water content of the decorated readily formable paper 11 affects also the shape of this decorated readily formable paper 11. More particularly, with this decorated readily formable paper 11, due to its good stretching ability, elongation or shrinkage tends to occur due to change in the water content, which significantly affects the positioning at the time of molding.

The language "water content" of the decorated readily formable paper 11 as used in this disclosure has a following meaning. Namely, the language means a value of a ratio in percentage of the weight of water contained in the decorated readily formable paper 11 relative to the total weight of this decorated readily formable paper 11 containing the water. Further, the water content of the decorated readily formable paper 11 can be determined with using a water meter. For instance, a product sold as HK-300 series from Kett Electric Laboratory can be used.

Next, the decorated readily formable paper 11 is disposed into the mold 3 and then clamped (see Fig. 3).

As the mold 3, there will be employed one which is for use in the pulp injection molding method configured such that introduction of the molding material 5 for obtaining the fibrous molded article 6 is allowed and that water contained in the molding material 5 is forcibly discharged and removed therefrom as vapor by means of heating (see Japanese Registered Patent No. 2916136 and Japanese Registered Patent No. 3084216, etc.).

In order to allow the decorated readily formable paper 11 to follow the surface of the cavity 4 of the mold 3 in a reliable manner, the decorated readily formable paper 11 may be pre-formed three-dimensionally to the shape of the surface of the cavity 4 in advance (preliminary forming). Such three-dimensional forming can be implemented by any known method such as pressing method. If the decorated readily formable paper 11 is disposed in close contact with the cavity face contour, it is possible, in the subsequent charging step of the molding material 5, to avoid inconvenience of the molding material 5 being displaced toward the side of face where the foremost surface of the decorated readily formable paper 11 is to be positioned finally (this phenomenon is called also as "reversing").

Next, as the molding material 5, the mixture obtained by adding the polymer binder and water to the fibrous main raw material and mixing/kneading them together is used and this molding material 5 is charged into the cavity 4 of the heated mold 3 (see Fig. 4).

As the fibrous main raw material, any conventionally used paper making material can be used such as wood pulp using conifer tree wood or broad-leaved tree wood, non-wood pulp such as kenaf or bagasse, or waste paper pulp, etc. Further, natural fibrous material such as paper trash or paper waste, cotton cloth, hemp, rice husks, bean husks, wood powder, can be used. Also, any glass fiber or synthetic fiber such as nylon, polyacrylate, polyester, etc. can also be used. Among these, paper fiber such as paper trash, waste paper, etc. is preferred. Incidentally, the fiber length of such paper fiber is short. Therefore, in the case of a molded article requiring strength, it will be effective to add other kind of fiber thereto by a ratio from 5 to 40%, preferably from 5 to 20%. And, the length of the fiber to be added should preferably range from 3 to 10 mm.

The polymer binder preferably comprises one which is water-soluble or forms an emulsion having low viscosity in case it is to be mixed and kneaded with the fibrous main raw material and which allows easy removal of a molded article in the form of a solid from the mold after removal of water by its evaporation. Specifically, water-soluble polymer materials such as starch, polyvinyl alcohol, polyacrylic acid, polyacrylamide, polyitaconic acid, carboxymethyl cellulose, as well as copolymers thereof can be used. Further, even thermosetting resins which are not originally water-soluble, such as urea resin, melamine resin, phenol resin, unsaturated polyester, can also be used as long as their initial condensates form aqueous solutions or emulsions.

To the above-described fibrous main raw material, the above-described polymer binder and water are added and then mixed and kneaded together, thereby to provide a mixture as the molding material 5. As to the mixing ratio of the molding material 5, for example, the fibrous main raw material should be contained by from 50% to 90%, preferably by from 60 to 80%, the polymer binder should be contained by from 10 to 50%, preferably by from 20 to 40%, and the water should be contained by from 20 to 80%, preferably from 30 to 70%.

Heating of the mold 3 should be carried out, for example, to render the temperature of the mold wall face forming the cavity 4 to 120°C-240°C, preferably to 160°C-220°C.

Next, a gap of 0.02 to 0.50 mm is formed between parting faces of the mold 3 and vapor generated within the cavity 4 is discharged and removed from this gap to allow drying and solidification of the molding material 5.

Upon charging of the molding material 5 into the cavity 4 of the heated mold 3, the water added at the time of mixing/kneading is evaporated instantly and its vapor pressure causes the fibrous main raw material to be foamed. At the same time, the vapor pressure causes the fibrous main raw material to fill the inside of the cavity 4, thus the fibrous main raw material being pressed against its wall face. Accordingly, even a molded article having highly variable wall thickness can be molded with good transfer performance, and also as the evaporated vapor is discharged and removed from the gap between the mold 3 halves, solidification of the molded article can proceed speedily.

With the decorated readily formable paper according to the present invention, in the protection layer, the hydroxy group of the acryl polyol and the isocyanate group of the isocyanate are crosslinked, that is, thermoset, to each other by the heat used in drying the ink applied film. For this reason, even if this decorated readily formable paper is exposed to the heat of the heated mold 3 and the pressure applied when the molding material is charged into the cavity, the thermoset protection layer 8 can prevent the pattern-forming ink from being fluidized to render the film thickness non-uniform. That is, the ink running phenomenon can be effectively prevented.

Incidentally, in the case of decorative papers for use in packaging, laminating with a polypropylene film is often provided on the surface of the decorative paper for protection of this surface. In this regard, in the configuration of the present invention, if such polypropylene film were employed as the protection layer, this, due to its poor air permeability, would hinder discharging of water vapor in the drying process. Moreover, due to its lack of heat resistance, quality change or deterioration such as melting or yellowing will occur by the heating in the drying process.

On the other hand, as the decorated readily formable paper 11 according to the present invention has good air permeability, it provides no hindrance to the vapor discharging in the drying process. Moreover, as this decorated readily formable paper 11 is formed of materials having good heat resistance such as pulp, etc., quality change or deterioration such as melting or yellowing will not occur by the heating in the drying process.

Subsequently, with mold opening, there can be obtained an in-mold decorated fibrous molded article 7 having the decorated readily formable paper 11 being formed integrally on the surface of the fibrous molded article 6 (see Fig. 5).

Lastly, if necessary, any unneeded part of the decorated readily formable paper 11 in the circumference of the fibrous molded article 6 is removed by such means as the pressing method, the Thomson method, etc., whereby the beautiful in-mold decorated fibrous molded article 7 can be obtained (see Fig. 6).

Further, since the protection layer is thermoset to be firmly and closely bonded to the readily formable paper, the close contact state of the pattern layer therebetween is improved, whereby good friction resistance is achieved.

The in-mold decorated fibrous molded article 7 obtained and configured as described above achieves good performance for prevention of ink running and friction resistance, and being formed beautiful also.

Moreover, since no gap is formed between the region of the fibrous molded article 6 contacting the cavity face and the region of the readily formable paper 1 contacting the cavity face, superior continuous uniformity is achieved in the surface. Further, since the fibrous molded article 6 and the decorated readily formable paper 1 are placed in firm contact with each other due to hydrogen bond, integration is possible even without using an adhesive agent or the like. In addition, both the decorated readily formable paper 11 and the fibrous molded article 6 are formed of fibrous materials such as pulp, thus providing unique soft touch. Moreover, as these both are formed of the fibrous materials such as pulp, these can be handled very easily at the time of reuse and disposal, thus achieving an environmentally friendly product.

In the above, the first embodiment of the present invention has been explained. The invention, however, is not limited thereto. For instance, the ink composition for forming the protection layer can contain silica solid particles, in addition to the acryl polyol and the multifunctional isocyanate (second embodiment). With addition of such silica solid particles, further improvement is achieved in the vapor permeability, so deterioration in the outer appearance will occur even less likely.

**[Silica Solid Particles]**

Preferably, the silica solid particles should be contained by from 5 to 25 wt.%, more preferably, from 10 to 20 wt.%. If the content is below 5 wt.%, deterioration will occur in the vapor permeability. On the other hand, if the content exceeds 25 wt.%, this will present difficulty in mixing the silica solid particles in the ink composition, thus making printing difficult.

The shape of the silica solid particles can be spherical, oval, polygonal, scale-shape, etc. And, it is preferred that the shapes of the particles be uniform and regular.

Further, the average particle diameter of the silica solid particles can be selected as desired, in accordance with the thickness of the layer to be formed by the ink composition. Generally, it is preferred that the average particle diameter range from 2 to 3 *µ*m.

In the above, the average particle diameter can be determined by JIS Z 8820-1 (Determination of particle size distribution by gravitational liquid sedimentation methods).

### Examples

### <Example 1>

On one face of a readily formable paper (manufactured by CARTIERE CARIOLARO S.p.A.) formed 100% of pulp and having fine creases on one face thereof, printed layers were formed with using the offset printing technique. The printed layers included a pattern layer, a varnish layer and a protection layer. As the pattern layer, "BEST ONE BEST SP (commercial name)" (manufactured by T&K TOKA Co. Ltd.) was employed. As the varnish layer, "Super Anti-Blocking OP Varnish (commercial name)" (manufactured by Mitsuboshi Printing Ink Co., Ltd.) was employed. As the protection layer, ink that contained acryl polyol having an OH value of 86 and hexamethylene diisocyanate, by the weight ratio therebetween of 100/6 parts and that contained also silica solid particles by 20 wt.% was used.

Next, this readily formable paper was kept for five hours in a room set to 25°C room temperature and 50% humidity to adjust the water content of the readily formable paper to 10%. Then, the paper was press-formed in advance into a form of a molded article to be obtained and formed to a three-dimensional shape following the cavity face contour of the mold. In the course of this, the use of hexamethylene diisocyanate provides good film flexibility.

Further, as fibrous main raw materials, hemp and kozoa paper mulberry were used and starch was employed as the polymer binder. To these water was added and with mixing and kneading of the mixture a molding material was obtained.

Then, the above-described readily formable paper was fixed to the cavity face of an pulp injection molding type mold heated to 155°C to 170°C. And, then, the mold was clamped to charge the above-described molding material therein. Subsequently, a gap of 0.20 mm was formed between the parting faces of the mold and water vapor was discharged and removed for 1 minute to allow drying and solidification of the molding material. In this, the addition of the silica solid particles provides improvement in vapor permeability.

Next, the mold was opened, from which a fibrous molded article having the readily formable paper integrated therewith was obtained. Then, the circumferential part, etc. of the readily formable paper was removed by punching by the Thomson method, whereby an in-mold decorated fibrous molded article was obtained.

It was found that the in-mold decorated fibrous molded article obtained in Example 1 described above suffered no ink running in the pattern of the in-mold decorated fibrous molded article surface and had good friction resistance and good aesthetic appearance also. Incidentally, thanks to the high OH value of 86, the crosslinking density between the hydroxyl group of the acryl polyol and the isocyanate group of the isocyanate was high, thus achieving the above-described advantageous effect in further superior manner.

### <Example 2>

This example is identical to Example 1, except that acryl polyol used had an OH value of 27.

It was found that the in-mold decorated fibrous molded article obtained in the manner described above too, though not so favorably as Example 1, suffered no ink running in the pattern of the in-mold decorated fibrous molded article surface and had good friction resistance and good aesthetic appearance also. Further, since acryl polyol had a few number of hydroxyl groups represented by the low OH value of 27, the crosslinking density between the hydroxyl group of the acryl polyol and the isocyanate group of the isocyanate was low, thus achieving good stretching ability.

Incidentally, the decorated readily formable paper 11 is not limited to the layer structure of the above-described Example 1.

With reference to Fig. 7, the decorated readily formable paper 11 can be configured with reversing the laminating order between the varnish layer 9 and the pattern layer 8, such that the decorated readily formable paper 11 includes a readily formable paper 1, a varnish layer 9 on one face of the readily formable paper 1, a pattern layer 8 formed on the readily formable paper 1 and the varnish layer 9, and a protection layer 10 formed on the pattern layer 8.

The varnish layer 9 can prevent permeation of the ink component constituting the protection layer 10 into the readily formable paper 1 at the time of forming the protection layer 10.

### Industrial Applicability

The present invention relates to a method of manufacturing an in-mold decorated fibrous molded article, which can manufacture an in-mold decorated fibrous molded article that allows beautiful decoration in particular.

### Description of Reference Marks/Numerals

- 1: readily formable paper
- 2: printed layer
- 3: mold
- 4: cavity
- 5: molding material
- 6: fibrous molded article
- 7: in-mold decorated fibrous molded article
- 8: pattern layer
- 9: varnish layer
- 10: protection layer
- 11: decorated readily formable paper

## Claims

1. A decorated readily formable paper comprising:
a readily formable paper whose apparent size is reduced by formation of fine creases on one face thereof;
a pattern layer formed on one face of the readily formable paper;
a varnish layer formed on the readily formable paper and the pattern layer; and
a protection layer formed on the varnish layer, the protection layer being comprised of an ink composition containing a polyol-based compound and a multifunctional isocyanate.

2. A decorated readily formable paper comprising:
a readily formable paper whose apparent size is reduced by formation of fine creases on one face thereof;
a varnish layer formed on one face of the readily formable paper;
a pattern layer formed on the varnish layer; and
a protection layer formed on the pattern layer, the protection layer being comprised of an ink composition containing a polyol-based compound and a multifunctional isocyanate.

3. The decorated readily formable paper according to claim 1 or 2, wherein a weight ratio between the polyol-based compound and the multifunctional isocyanate ranges from 100/3 to 100/20 parts.

4. The decorated readily formable paper according to any one of claims 1-3, wherein the ink composition of the protection layer further contains silica solid particles by 5 to 25 wt.%.

5. The decorated readily formable paper according to any one of claims 1-4, wherein the polyol-based compound comprises acryl polyol having an OH value ranging from 20 to 90.

6. The decorated readily formable paper according to any one of claims 1-5, wherein the polyol-based compound comprises acryl polyol having an OH value ranging from 80 to 90.

7. The decorated readily formable paper according to any one of claims 1-5, wherein the polyol-based compound comprises acryl polyol having an OH value ranging from 20 to 30.

8. The decorated readily formable paper according to any one of claims 1-7, wherein the isocyanate comprises hexamethylene diisocyanate type.

9. A method of manufacturing an in-mold decorated fibrous molded article, comprising the steps of:
fitting the decorated readily formable paper according to any one of claims 1-8 in a mold;
clamping the mold;
preparing a mixture by adding polymer binder and water to a fibrous main raw material and mixed/kneaded together as a molding material and charging the molding material within a cavity of the mold which is heated;
forming a gap ranging from 0.02 to 0.50 mm between parting faces of the mold and discharging and removing vapor generated within the cavity from the gap, and allowing the molding material to be dried and solidified; and
opening the mold and obtaining therefrom a fibrous molded article having the decorated readily formable paper integrally formed on its surface.

10. The method of manufacturing in-mold decorated fibrous molded article according to claim 9, wherein the readily formable paper before being fitted in the mold has a water content ranging from 5 to 10%.
